# EUROPEAN PATENT APPLICATION

(11) **EP 4 311 611 A1**
(43) Date of publication of application: **31.01.2024**
(21) Application number: 22187775.6
(22) Date of filing: 29.07.2022
(51) Int. Cl.: B22D 19/00, G04B 15/14, G04B 17/06, G04B 19/04, G04B 19/12, G04B 19/28, G04B 29/00, G04B 37/22

(54) **METHODS OF MANUFACTURING A COMPOSITE HOROLOGICAL OR JEWELRY COMPONENT**

(71) Applicant: Richemont International S.A., 1752 Villars-sur-Glâne (CH)
(72) Inventor: CASAMENTI, Enrico, 6900 Lugano (CH); DURAND, Adeline, 59820 Gravelines (FR); BELLOUARD, Yves, 1095 Lutry (CH); MORTENSEN, Andreas, 1113 St Saphorin-sur-Norges (CH); BERTUSI, Paul, 1006 Lausanne (CH)
(74) Representative: e-Patent SA

(57) **Abstract**

Method of manufacturing a composite horological or jewelry component (1), comprising steps of:
- providing a substrate of photostructurable material (3);
- selectively irradiating said photostructurable material (3) with a laser (4) so as to define at least one laser-modified region (5) within said substrate (3) which adjoins a surface (3a) of said substrate and is susceptible to removal, said laser-modified region (5) being in the form of a shell surrounding a core (7) of unirradiated photostructurable material;
- removing said at least one said laser-modified region (5) so as to define a cavity (9) surrounding said core (7);
- infiltrating a liquid castable material (11) into said cavity (9);
- cooling said castable material (11) to solidify it;
- liberating said core (7) and said infiltrated castable material (11) from said substrate.

## Description

### Technical Field

The present invention relates to the field of horology and jewelry. More particularly, it relates to methods of manufacturing a composite horological component or jewelry component, and to such components produced thereby.

### State of the Art

WO2017/081635 relates to methods of producing complex components from a castable material (e.g. a metal), and complex composite components from a castable material (e.g. a metal) within a photostructurable material (e.g. a photostructurable glass). In the field of interest as indicated above, this document discloses examples such as indexes embedded in a watch glass, gears, escapements, springs, hands, indicator discs and watch covers.

More generally, the processes described in this document permit the production of tiny castings of shapes that cannot be produced by micromachining or 2D lithography, and also the production of transparent objects with metal (or other castable material) embedded therein.

These processes entail taking a substrate of photostructurable material, exposing the substrate to focused laser irradiation at a preselected series of locations that trace a subset of the substrate volume that is connected to its surface, removing the substrate material from this irradiated volume, e.g. by etching or mechanical means, infiltrating the castable material into the cavity thereby created, solidifying the castable material, and then optionally removing the remaining substrate.

Those methods only allow production of structures made of the castable material alone, or structures formed from a block of substrate with a single interconnected piece of castable material disposed therein.

The aim of the invention is thus to propose methods by which a range of other composite structures can be produced, as well as horological and jewelry components manufactured thereby.

### Disclosure of the Invention

More precisely, a first embodiment of the invention relates to a method of manufacturing a composite horological or jewelry component, comprising steps of:
- providing a substrate of photostructurable material, such as a photostructurable glass or any of the other suitable materials mentioned below;
- selectively irradiating said photostructurable material with a laser so as to define at least one laser-modified region of said substrate which adjoins at least one surface of the substrate and is susceptible to removal, said laser-modified region being in the form of a shell surrounding a core of unirradiated photostructurable material; subsequently
- removing said at least one laser-modified region, e.g. by etching or similarly, so as to define a cavity surrounding said core, the cavity typically covering the overwhelming area (i.e. greater than 80%, preferably greater than 90% or even 99%) of the surface of the core; subsequently
- infiltrating a liquid castable material, such as a metal, into said cavity; subsequently
- cooling said castable material to solidify it; subsequently
- liberating said core and said infiltrated castable material as a unit from said substrate, thereby leaving a component comprising a core of photostructurable material and an outer shell of castable material.

The resulting component may, for instance, exhibit locally-increased strength due to the different materials used, particular visual effects, to reduce the amount of castable material (e.g. metal) used for a component of a given size, or similar.

Advantageously, said cavity has a thickness of at least 100 nm and at most several millimeters (typically at most 3 or 4 mm, although in principle there is no limit), thereby resulting in a layer of castable material surrounding the core with the same thickness.

In an alternative embodiment, the invention relates to a method of manufacturing a horological or jewelry component, comprising steps of:
- providing a substrate of photostructurable material as before; subsequently
- selectively irradiating said photostructurable material with a laser so as to define a first laser-modified region of said substrate which adjoins at least one surface of the substrate and is susceptible to removal and is destined to define a core of said component, as well as to define a second laser-modified region of said substrate which also adjoins at least one surface of the substrate and is also susceptible to removal, this second laser-modified region being in the form of a shell surrounding said first laser-modified region of said substrate and spaced therefrom by a predetermined thickness of unirradiated photostructurable material; subsequently
- removing said first laser-modified region so as to create a first cavity defining said core; subsequently
- infiltrating a castable material into said first cavity so as to form said core;
- solidifying said castable material; subsequently
- liberating said core and said predetermined thickness of unirradiated photostructurable material from said substrate.

In one variant, said step of liberating said core and said predetermined thickness of unirradiated photostructurable material from said substrate comprises a step of removing said second laser-modified region so as to form a second cavity, then subsequently removing said substrate from around said second cavity e.g. by etching, laser ablation or mechanically e.g. by high-pressure liquid, grinding, polishing or diamond CNC milling, or gas erosion. This results in a component comprising a core of castable material and a shell of photostructurable material, which may e.g. protect the underlying castable material from corrosion, provide particular visual effects, provide locally increased strength, or similar.

In another variant, after solidifying said castable material and prior to liberating said core and said predetermined thickness of unirradiated photostructurable material from said substrate, the method comprises further steps of:
- removing said second laser-modified region to form a second cavity;
- infiltrating a castable material into said second cavity, which may be the same or different to the castable material defining the core;
- solidifying this newly-infiltrated castable material.

The composite comprising the core of castable material surrounded by a shell of photostructurable material and a further shell layer of castable material previously infiltrated into the second cavity can then be liberated from the remainder of the substrate.

Advantageously, said second cavity has a thickness of at least 100 nm and at most several millimeters (typically at most 3 or 4 mm, although in principle there is no limit).

Advantageously, said predetermined thickness of unirradiated photostructurable material has a thickness of at least 100 nm and at most several millimeters (typically at most 3 or 4 mm, although in principle there is no limit).

Advantageously, the component is liberated from the substrate by etching the latter, although other methods such as laser ablation, erosion by high pressure liquid and/or gas, mechanical means as detailed herein or any combination thereof are also possible.

The photostructurable material may be chosen from:
- photostructurable oxide glasses such as fused silica, fused quartz, borosilicate glass, aluminosilicate glass, tellurite glass, germanosilicate glass, lithium aluminosilicate;
- photostructurable porous glasses such as nanoporous or microporous glass;
- photostructurable laser-transparent crystalline or semi- crystalline ceramics such as sapphire, ruby, diamond or a nitride, a carbide or silicon.

The castable material may be chosen from:
- metals, such as copper, silver, gold, platinum, palladium, aluminium, magnesium, zinc, tin, nickel, iron, titanium, their alloys or any combination thereof.
- semiconductors, such as silicon, germanium, gallium arsenide, titanium dioxide, and their alloys such as silicon-germanium alloy, or a combination thereof.
- Polymers, such as acrylic (PMMA), acrylonitrile butadiene styrene (ABS), nylon polyamide (PA), polycarbonate (PC), polyethylene (PE), Polyoxymethylene (PP), polyoxymethylene (POM), and their associated reinforced composite that are susceptible to be infiltrated into the cavity or cavities.

Advantageously, said photostructurable material is a photostructurable glass and said castable material is a metal or a metal alloy, preferably including one or more of copper, gold or silver.

Typically, said component is one of the following horological components:
a support such as a bridge;
- an index;
- a hand;
- a decorative element;
- an anchor;
- a balance;
- a hair spring;
- a watch mainspring;
- a gearwheel;
- a bezel;
- a crown.

The invention further relates to a horological or jewelry component comprising:
- a core of castable material
- a layer of photostructrable material with a thickness of at least 100 nm and at most several millimeters typically at most 3 or 4 mm, although in principle there is no limit) provided on said core;
- a layer of castable material with a thickness of at least 100 nm and at most several millimeters provided (typically at most 3 or 4 mm, although in principle there is no limit) on said layer of photostructurable material.

Finally, the invention relates to a horological or jewelry component manufactured according to any of the methods described above.

### Brief description of the Figures

Further details of the invention will appear more clearly upon reading the following description, in connection with the appended figures, in which:
- Figure 1 is a schematic representation of a first embodiment of a method according to the invention;
- Figures 2a and 2b are a schematic representation of a second and a third embodiment of a method according to the invention.

### Embodiments of the Invention

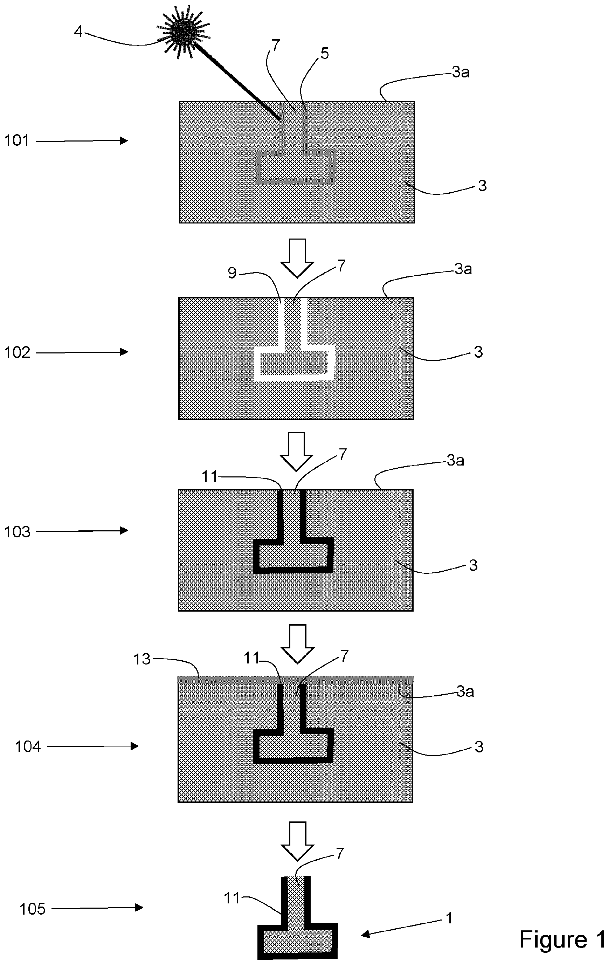

Figure 1 illustrates a first embodiment of a method according to the invention, which results in the production of a composite horological or jewelry component 1 with a core of photostructurable material 7 and an outer coating of a castable material 11.

The photostructurable material may be, for instance, an oxide glass such as fused silica, fused quartz, borosilicate glass, aluminosilicate glass, tellurite glass, germanosilicate glass, lithium aluminosilicate or a porous glass such as nanoporous or microporous glass. Alternatively, it may be a laser-transparent crystalline or semi- crystalline ceramic such as sapphire, ruby, diamond or a nitride, a carbide or silicon. Other materials are also possible, provided that they can be modified with a laser as described below, such that the irradiated regions can be removed by etching, laser ablation, flushing by liquid and/or gas, or any combination thereof. Typically, photostructurable glasses are used.

The castable material is typically a metal, whether pure or alloyed, such as copper, silver, gold, platinum, palladium, aluminium, magnesium, zinc, tin, nickel, iron, titanium, their alloys or any combination thereof. Other equivalent metals and alloys may be envisaged as well. Alternatively, the castable material may be a semiconductor, including silicon, germanium, gallium arsenide, titanium dioxide, and their alloys (in particular silicon-germanium alloy) or a combination thereof. Polymers, such as acrylic (PMMA), acrylonitrile butadiene styrene (ABS), nylon polyamide (PA), polycarbonate (PC), polyethylene (PE), Polyoxymethylene (PP), polyoxymethylene (POM), and their associated reinforced composites, insofar as they are susceptible to be infiltrated into the cavities 9, 9a, 9b, can also be used. Typically, however, metals such as silver, gold, copper and alloys thereof are used.

The combination of photostructurable material and castable material should be chosen such that the melting point of the castable material is below that of the photostructurable material to avoid melting or deforming this latter during infiltration, as will become clear below.

Figure 1 illustrates a first embodiment of a method for manufacturing a composite horological or jewelry component 1 according to the invention. Firstly, a substrate 3 of photostructurable material is provided, the dimensions of the substrate being appropriate to the size and shape of the composite component 100 resulting from the method and to the penetration capabilities of the laser 4.

The substrate 3 is irradiated and modified (step 101) with at least one suitable laser 4 which causes the structure of the substrate 3 to be changed so as to make it susceptible to removal (e.g. by etching, but other possibilities are described below), either using focused laser radiation or multiple lower-powered lasers whose beams cross at locations in the volume of the substrate 3 that it is desired to modify. Such lasers are so-called ultra-short or femtosecond lasers, and emit extremely powerful but extremely short laser pulses, in the picosecond or typically femtosecond range. The laser-modified region 5 is created as a relatively thin shell with a thickness typically in the range of 20-500 µm, preferably 20-100 µm, although as low as 100nm and as high as several millimeters (e.g. 3mm or 4mm, although in principle there is no upper limit) are possible, surrounding a core 6 of unirradiated substrate material. In order to permit removal of the laser-modified region 5, this latter contacts and adjoins at least one outer surface 3a of the substrate 3 so as to be accessible to a removal agent. Since the core 7 must remain suspended in the substrate 3 after removal of the laser-modified region 5, at least one fixing point (not illustrated) is defined by a relatively small stub of unmodified substrate material extending from the core 7 to the remainder of the substrate 3, passing through the laser-modified region 5.

Subsequently (step 102), the laser-modified region 5 is removed to form a shell-shaped cavity 9 by etching with a suitable etchant (such as HF or KOH or NaOH), flushing using liquid or gas or a combination thereof. As an alternative, the steps of modification of the structure of the photostructurable material and its removal may be combined by modifying the substrate with laser ablation and removing the ablated material by water, as described in A. J. Hunt, "Nanomorphing with Ultrafast Lasers and Biomedical Applications," in MRS Proceedings (2011), Vol. 1365. The cavity 9 opens onto the face 3a of the substrate 3, with the core 9 being suspended therein by the aforementioned fixing point(s).

Subsequently (step 103), a castable material 11 is infiltrated into the cavity 9, completely filling it, and then solidified. This is typically carried out with molten castable material under pressure and in a vacuum environment or under an atmosphere which is sufficiently absorbed or compressed by the infiltrating castable material, followed by subsequent cooling. A full description of suitable infiltration methods is disclosed in WO2017/081635, herein incorporated by reference in its entirety, as well as in various non-patent literature references cited therein. As a result, a complete description of such processes is not required.

However, typically the surface 3a of the substrate upon which the cavity 9 opens is touched to the surface of molten castable material under vacuum conditions at least over the entire area where cavity 9 meets surface 3a, and pressure is applied to the molten castable material to force it into the cavity 9. The substrate with the thus filled cavity is then allowed to cool.

The resulting piece at the end of this step hence comprises a relatively thin shell of castable material embedded in the substrate 3 and surrounding a core 7, with at least one fixing point joining the core 7 to the rest of the substrate 3. The steps of selective irradiation, removal of the resulting laser-modified region and infiltration can be repeated as many times as desired in order to create a multi-layered component 1 comprising alternating layers of castable material and photostructurable material.

In order to liberate the component 1 from the substrate 3, the remainder of this latter is removed by etching with an etchant which selectively etches the photostructurable material but not the castable material. In order to protect the core 7 from the etchant, the entirety of the face 3a of the substrate is coated with an etch-resistant coating 13. This does not need to be patterned to protect the only the core 7, and can hence be provided of the full area of surface 3a e.g. by printing, spin coating, chemical vapour deposition, physical vapour deposition or similar of a suitable etch resistant material, although it can be patterned if desired. The entire substrate can then be immersed in an etchant, liberating the component 1 which hence comprises the core 7 and the shell of castable material 11.

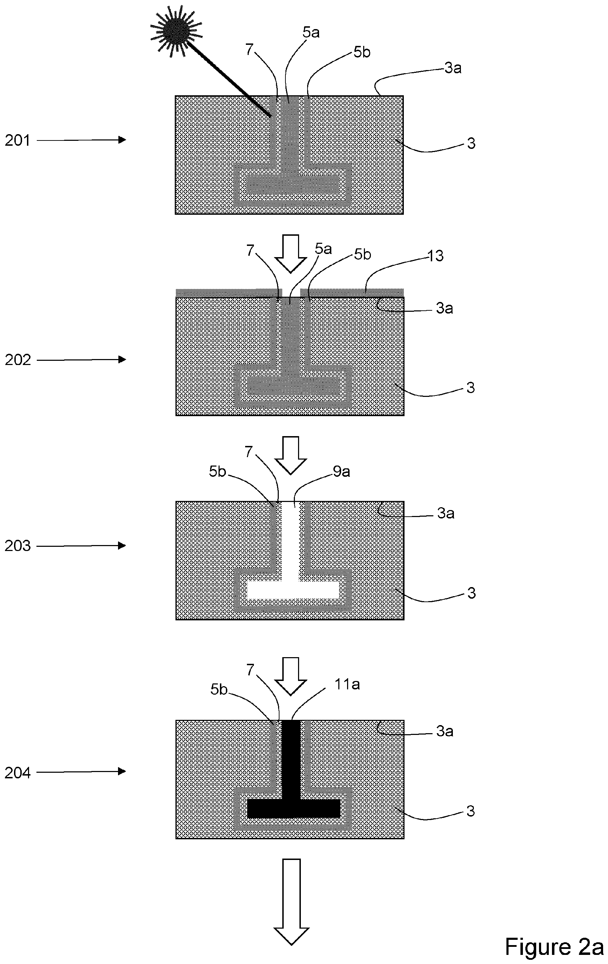

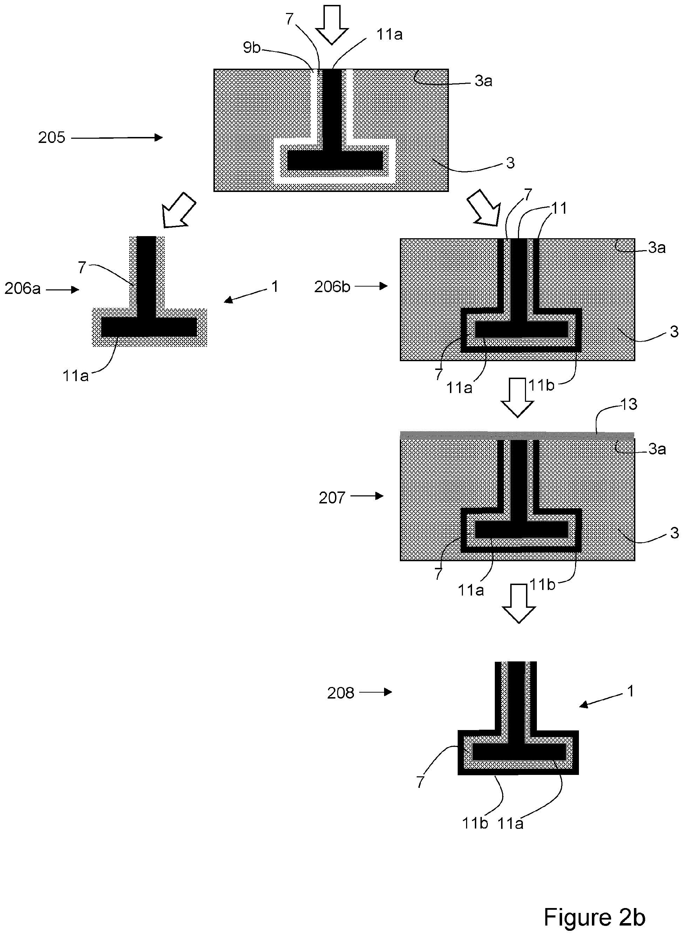

Figures 2a and 2b illustrate second and third embodiments of a method according to the invention, which will be described in terms of how they differ from the method of figure 1. Steps 201-205 are common to both of these embodiments.

In a substrate 3, a first laser-modified region 5a and a second laser-modified region 5b are created with laser 4, the first laser-modified region 5a being ultimately destined to define a core of castable material, and the second laser-modified region 5b being analogous to the laser-modified region 5 of the method of figure 1 in the form of a shell (step 201) and subject to the same typical thicknesses as mentioned above. The first laser-modified region 5a is situated completely within the second laser-modified region 5b, the two laser-modified regions 5a, 5b being separated from each other by an unmodified region 7 which will become a shell surrounding the core of castable material, this shell also having a typical thickness in the range of 20-500 µm, preferably 20-100 µm, although as low as 100nm and as high as several millimeters (e.g. 3mm or 4mm, although in principle there is no upper limit) are possible. As before, both the laser-modified regions 5a, 5b join at least one surface 3a of the substrate 3.

Subsequently (step 202), an etching mask 13 is selectively applied to the surface 3a of the substrate 3, protecting at least the second laser-modified region 5b from etching.

The first laser-modified region 5a is then etched to form a first cavity 9a, and the etching mask is removed (step 203).

Subsequently, castable material 11a is infiltrated into the first cavity 9a (step 204).

The second laser-modified region 5b is then etched to form a second cavity 9b (step 205). At this point, the method splits into the second embodiment (on the left of figure 2b) and the third embodiment (on the right of figure 2b).

For the second embodiment, the component 1 is now simply liberated from the substrate 3, by etching, mechanically breaking or machining the remainder of the substrate, or any other convenient means (step 206a).

For the third embodiment, the second cavity 9b is infiltrated with castable material 11b (step 206b), which may be the same or different to the castable material 11a used to fill first cavity 9a and hence constitute the core of the component 1. For this embodiment, during laser irradiation, fixing elements (not illustrated) of unmodified photostructurable material are formed during step 201 similarly to in the embodiment of figure 1 through the thickness of the second laser-modified region 5b so as to suspend the core of castable material 11a and shell of photostructurable material 7 within the substrate 3 when second cavity 9b is formed, whereas they are not necessary for the second embodiment.

Subsequently, the remainder of the substrate 3 is removed, e.g. by masking the surface 3a with an etching mask (step 207) and etching or otherwise removing the substrate 3 as mentioned above (step 208). However, in certain cases an etching mask 13 may not be necessary..

The foregoing processes illustrate a single component 1 being fabricated from a substrate 3, but, as is known in the field of micromachining, multiple components 1, whether the same or different to each other, can be fabricated from one single substrate 3.

The components 1 made by the methods of the invention may be, for instance, supports, bridges, indexes, decorative elements, hands, bezels, scales, gear wheels, anchors, balances, hairsprings, mainsprings, bezels, crowns and more generally any horological or jewelry component.

Although the invention has been described in reference to specific embodiments, variations thereto are possible without departing from the scope of the invention as defined in the appended claims.

## Claims

1. Method of manufacturing a composite horological or jewelry component (1), comprising steps of:
- providing a substrate of photostructurable material (3);
- selectively irradiating said photostructurable material (3) with a laser (4) so as to define at least one laser-modified region (5) within said substrate (3) which adjoins at least one surface (3a) of said substrate and is susceptible to removal, said laser-modified region (5) being in the form of a shell surrounding a core (7) of unirradiated photostructurable material;
- removing said at least one said laser-modified region (5) so as to define a cavity (9) surrounding said core (7);
- infiltrating a liquid castable material (11) into said cavity (9);
- cooling said castable material (11) to solidify it;
- liberating said core (7) and said infiltrated castable material (11) from said substrate.

2. Method according to the preceding claim, wherein said cavity (9) has a thickness of between 100 nm and 4 mm.

3. Method of manufacturing a horological or jewelry component (1), comprising steps of:
- providing a substrate of photostructurable material (3);
- selectively irradiating said photostructurable material (3) with a laser (4) so as to define a first laser-modified region (5a) within said substrate (3) which adjoins at least one surface (3a) of said substrate and is susceptible to removal, said first laser-modified region (5a) being destined to define a core of said component (1), and to define a second laser-modified region (5b) of said substrate which adjoins said at least one surface (3a) of said substrate and is susceptible to removal, said second laser-modified region (5b) being in the form of a shell surrounding said first laser-modified region of said substrate and spaced therefrom by a predetermined thickness of unirradiated photostructurable material (7);
- removing said first laser-modified region (5a) so as to create a first cavity (9a) defining said core;
- infiltrating a castable material (11a) into said first cavity (9a) so as to form said core (11a);
- solidifying said castable material (11a);
- liberating said core (11a) and said predetermined thickness of unirradiated photostructurable material (7) from said substrate (3).

4. Method according to claim 3, wherein said step of liberating said core (11a) and said predetermined thickness of unirradiated photostructurable material (7) from said substrate (3) comprises a step of removing said second laser-modified region (5b) so as to form a second cavity (9b), then removing said substrate (3) from around said second cavity (9b).

5. Method according to claim 3, further comprising steps of, after solidifying said castable material (11a) and prior to liberating said core (11a) and said predetermined thickness of unirradiated photostructurable material (7) from said substrate (3):
- removing said second laser-modified region (5b) to form a second cavity (9b);
- infiltrating a castable material (11b) into said second cavity (9b);
- solidifying said castable material (11b).

6. Method according to claim 5, wherein said step of liberating said core (11a) and said predetermined thickness of unirradiated photostructurable material (7) from said substrate (3) also includes liberating said castable material (11b) filling the second cavity (9b) from said substrate (3), such that said component (1) comprises said core (11a), said predetermined thickness of unirradiated photostructurable material (7) and said castable material (11b) filling said second cavity (9b).

7. Method according to one of claims 4-6, wherein said second cavity (9b) has a thickness of between 100 nm and 4 mm.

8. Method according to one of claims 3-7, wherein said predetermined thickness of unirradiated photostructurable material (7) has a thickness of between 100 nm and 4 mm.

9. Method according to any preceding claim, wherein said step of liberation comprises etching and/ or machining said substrate (3).

10. Method according to any preceding claim, wherein said photostructurable material is chosen from:
- photostructurable oxide glasses such as fused silica, fused quartz, borosilicate glass, aluminosilicate glass, lithium aluminosilicate glass, tellurite glass, germanosilicate glass;
- photostructurable porous glasses such as nanoporous or microporous glass;
- photostructurable laser-transparent crystalline or semi- crystalline ceramics such as sapphire, ruby, diamond or a nitride, a carbide or silicon.

11. Method according to any preceding claim, wherein said castable material (11; 11a, 11b) is chosen from:
- metals, such as copper, silver, gold, platinum, palladium, aluminium, magnesium, zinc, tin, nickel, iron, titanium, their alloys or any combination thereof.
- semiconductors, such as silicon, germanium, gallium arsenide, titanium dioxide, and their alloys such as silicon-germanium alloy, or a combination thereof;
- polymers, such as acrylic (PMMA), acrylonitrile butadiene styrene (ABS), nylon polyamide (PA), polycarbonate (PC), polyethylene (PE), Polyoxymethylene (PP), polyoxymethylene (POM), and their associated reinforced composite which are susceptible to infiltration.

12. Method according to any preceding claim, wherein said photostructurable material is a photostructurable glass and said castable material is a metal or a metal alloy, preferably including one or more of copper, gold or silver.

13. Method according to any preceding claim, wherein said component (1) is one of:
- a support such as a bridge;
- an index;
- a hand;
- a decorative element;
- an anchor;
- a balance;
- a hair spring;
- a watch mainspring;
- a gearwheel;
- a bezel;
- a crown.

14. Horological or jewelry component (1) comprising:
- a core of castable material (11a);
- a layer of photostructrable material (7) with a thickness between 100 nm and 4 mm provided on said core (11a);
- a layer of castable material (11b) with a thickness of between 100 nm and 4 mm provided on said layer of photostructurable material (7).

15. Horological or jewelry component (1) manufactured according to the method of any of claims 1-12.
